# EUROPEAN PATENT APPLICATION

(11) **EP 3 889 410 A1**
(43) Date of publication of application: **06.10.2021**
(21) Application number: 21165207.8
(22) Date of filing: 26.03.2021
(51) Int. Cl.: F02C 7/228, F02C 9/34

(54) **REGULATED FLOW DIVIDER VALVES**

(30) Priority: 30.03.2020 US 202063002085 P
(71) Applicant: Hamilton Sundstrand Corporation, Charlotte, NC 28217-4578 (US)
(72) Inventor: RUTAR, Matej, Manchester, CT 06050 (US)
(74) Representative: Dehns

(57) **Abstract**

A system (100) includes a flow inlet conduit (102). A primary conduit (104) branches from the flow inlet conduit (102) for delivering flow to a set of primary nozzles. An equalization bypass valve (EBV) (106) connects between the flow inlet conduit (102) and a secondary conduit (108) for delivering flow to a set of secondary nozzles. The EBV (106) is connected to be controlled to apportion flow from the flow inlet conduit (102) to the secondary conduit (108). A regulator valve (110) is connected to be controlled by a pressure differential between pressure in the flow inlet conduit (PIN) and pressure in the secondary conduit (PSEC) to apportion flow from an inlet (112) of the regulator valve (110) to the flow inlet conduit (102).

## Description

### BACKGROUND

### 1. Field

The present disclosure relates to flow regulating systems, and more particularly to flow divider valves such as for use in aerospace fuel systems.

### 2. Description of Related Art

Gas turbine burners can have at least two sets of fuel injection nozzles, e.g., primary nozzles and secondary nozzles. Valves are used to control the flow split between the primary and secondary nozzles. There are transitions from one flow split to another that need to be rate controlled to prevent disturbances, especially at low flow conditions. The better the time response when switching from one flow split to another without disturbances, the better the system can perform.

The conventional techniques have been considered satisfactory for their intended purpose. However, there is an ever present need for improved systems and methods for regulated flow divider valves. This disclosure provides a solution for this need.

### SUMMARY

A system includes a flow inlet conduit. A primary conduit branches from the flow inlet conduit for delivering flow to a set of primary nozzles. An equalization bypass valve (EBV) connects between the flow inlet conduit and a secondary conduit for delivering flow to a set of secondary nozzles. The EBV is connected to be controlled to apportion flow from the flow inlet conduit to the secondary conduit. A regulator valve is connected to be controlled by a pressure differential between pressure in the flow inlet conduit (PIN) and pressure in the secondary conduit (PSEC) to apportion flow from an inlet of the regulator valve to the flow inlet conduit.

The regulator valve can include a piston that divides between inlet pressure from fuel flow meter (PFDV) and PSEC, and wherein the piston includes a chamber for passage of fluid from the inlet of the regulator valve into the flow inlet conduit. The piston can be positioned to selectively occlude an outlet of the regulator valve leading to the flow inlet conduit to meter flow into the flow inlet conduit based on pressure differential between PFDV and PSEC. The EBV can include a piston that divides between an equalization conduit and the flow inlet conduit to apportion flow from the flow inlet conduit to the secondary conduit based on pressure in the flow inlet conduit downstream of the flow regulator valve (PFDV) plus PFA, and pressure in the equalization conduit.

A pressure equalization solenoid (PES) can include a valve body positioned to selectively connect a conduit that is pressurized to PFA into fluid communication with a conduit that is pressurized to PD to switch the primary and secondary conduits between an equalized mode wherein the primary and secondary conduits are at equal pressure, and an un-equalized mode wherein the primary and secondary conduits are at unequal pressure. An un-equalized enrichment valve (UEV) can connect between the flow inlet conduit and the secondary conduit. The UEV can be configured to pressurize the primary conduit higher than the secondary conduit in the un-equalized mode.

A method includes increasing flow through the regulating valve as described above after a command for switching the system from an equalized mode to an un-equalized mode. The regulating valve can allows pressure in the flow inlet conduit and secondary conduit to change rapidly without affecting anything upstream. The method can include using the regulator valve to eliminate pressure changes upstream of the regulator valve.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

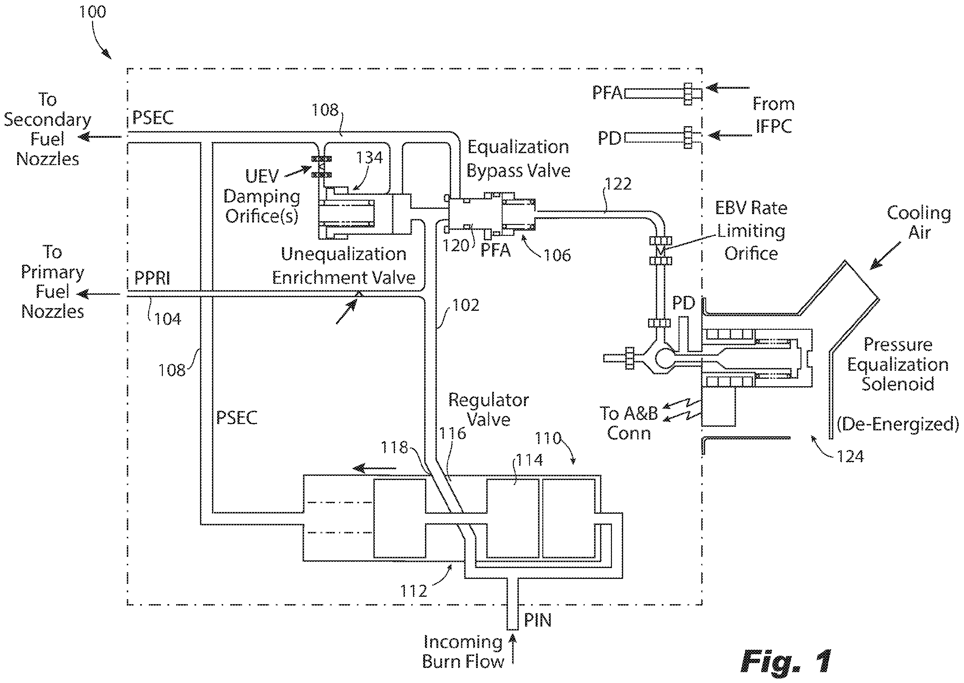

Fig. 1 is a schematic view of an embodiment of a system constructed in accordance with the present disclosure, showing the inlet flow conduit, primary conduit, secondary conduit, and the valves.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. The systems and methods described herein can be used to provide for fast flow split transitions without causing large fuel flow disturbances relative to traditional flow division systems that divide flow between a primary set of fuel nozzles and a secondary set of fuel nozzles. This can relieve the traditional need to tradeoff between flow split transition time and fuel flow disturbance requirements. The regulator valve can compensate and prevent any pressure changes upstream of the system, while the primary/secondary flow split can still occur. This can allow for much faster flow split transitions relative to traditional systems, and/or reduce the resulting fuel flow disturbances. A regulator valve as disclosed herein can be retrofitted into many existing flow division systems.

A system 100 includes a flow inlet conduit 102. A primary conduit 104 branches from the flow inlet conduit 102 for delivering flow to a set of primary nozzles. An equalization bypass valve (EBV) 106 connects between the flow inlet conduit 102 and a secondary conduit 108 for delivering flow to a set of secondary nozzles. The EBV 106 is connected to be controlled by IFPC servo pump supply pressure fine filtered (PFA) pressure (indicated at inlet 110 from integrated fuel pump controls (IFPC) in Fig. 1) to apportion flow from the flow inlet conduit 102 to the secondary conduit 108.

A regulator valve 110 connects between the flow inlet conduit 102 and the secondary conduit 108. The regulator valve 110 is connected to be controlled by the pressure differential between PIN (the pressure in the flow inlet conduit 102) and PSEC (the pressure in the secondary conduit) to apportion flow from an inlet 112 of the regulator valve 110 to the flow inlet conduit 102.

The regulator valve 110 includes a piston 114 that divides between PIN (inlet pressure from fuel flow meter) on the right side of the piston 114 and PSEC on the left side of the piston 114 (as oriented in Fig. 1). The piston 114 is dumbbell shaped and includes a middle chamber 116 for passage of fluid from the inlet 112 of the regulator valve 110 out through the outlet 118 of the regulator valve 110 and into the flow inlet conduit 102. The piston 114 is positioned to selectively occlude the outlet 118 leading to the flow inlet conduit 102 to meter flow into the flow inlet conduit 102 based on pressure differential between PIN and PSEC.

For example, if equalized PSEC = 100 psi, PPRI = 101 psi, PFDV (pressure in the inlet conduit 102 downstream of the regulator valve 110) =102 PSI, then the regulator valve 110 will maintain 130 psid between PSEC and PIN, so PIN = 230 psid (wherein there is 128 psid pressure drop through regulator valve going from PIN to PFDV).

Unequalized, the EBV 106 is closed, so for example if PSEC = 100 psi, PPRI = 200 psi, PFDV = 201 psi, and regulator valve maintains 130 psid between PSEC and PIN, then PIS still equals 230 psid (wherein there is just 29 psid pressure drop through regulator valve going from PIN to PFDV). Without the regulator valve 110, a change in PFDV would directly affect upstream components and could upset upstream components if the pressure change is too fast. With regulator valve 110, there extra variable pressured drop between PFDV and PIN allows PIN to remain constant though PFDV is changing, and upstream components see PIN.

The EBV 106 includes a piston 120 that divides between an equalization conduit 122 and the flow inlet conduit 102. The EBV 106 is a two position valve. When closed (with the EBV piston 120 on the left as oriented in Fig. 1), all PFDV flow from the inlet conduit 102 to secondary conduit 108 (at secondary pressure Psec) has to flow through the unequalized enrichment valve (UEV) 134, which regulates Psec to a higher pressure then PFDV (e.g., a 100 psid difference). When EBV 106 is open (with the piston 120 of the EBV 120 on the right as oriented in Fig. 1), the EBV 106 opens a large flow path between PFDV of the inlet conduit 102 and Psec of the secondary conduit 108. The pressure difference from Psec to PFDV is reduced (equalized) to 0 psid, or nearly 0 psid. The UEV 134 ends up closing when the EBV 106 is open because UEV 134 cannot set its regulation pressure because the flow area through the EBV 106 is big enough.

In positioning the EBV 106, PFA and PFDV pressure always act to open the valve (push the piston 120 to the right as oriented in Fig. 1 to unocclude the outlet 124 of the EBV 106). Then the pressure on the backside of the EBV 106 (the pressure in the equalization conduit 122) is switched between PFA and PD based on the positioning of the Pressure Equalization Solenoid (PES) 124. When the pressure in the conduit 122 is at PFA, the piston 120 of the EBV 106 moves to the left as oriented in Fig. 1 (to the closed position). When the pressure in the conduit 122 is at PD, the piston 120 of the EBV 106 moves to the right as oriented in Fig. 1 (to the open position). This valve actuation is a result of the inequality: PFA > PFDV > PD.

An un-equalized enrichment valve (UEV) 134 can connect between the flow inlet conduit 102 and the secondary conduit 108. The UEV 134 can be configured to pressurize the primary conduit 104 higher than the secondary conduit 108 in the un-equalized mode, e.g. for starting and burner tonal control.

A method includes increasing flow through the regulating valve 110 as described above after a command for switching the system 100 from the equalized mode described above to the un-equalized mode described above. The method can include using the regulator valve 110 to eliminate pressure changes upstream of the regulator valve 110.

The methods and systems of the present disclosure, as described above and shown in the drawings, provide for fast flow split transitions without causing large fuel flow disturbances relative to traditional flow division systems that divide flow between a primary set of fuel nozzles and a secondary set of fuel nozzles. This can relieve the traditional need to tradeoff between flow split transition time and fuel flow disturbance requirements. The regulator valve can compensate and prevent any pressure changes upstream of the system, while the primary/secondary flow split can still occur. This can allow for much faster flow split transitions relative to traditional systems, and/or reduce the resulting fuel flow disturbances. A regulator valve as disclosed herein can be retrofitted into many existing flow division systems. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system (100) comprising:
a flow inlet conduit (102);
a primary conduit (104) branching from the flow inlet conduit for delivering flow to a set of primary nozzles;
an equalization bypass valve, EBV (106), that connects between the flow inlet conduit and a secondary conduit (108) for delivering flow to a set of secondary nozzles, wherein the EBV (106) is connected to be controlled to apportion flow from the flow inlet conduit to the secondary conduit; and
a regulator valve (110) connected to be controlled by a pressure differential between pressure in the flow inlet conduit, PIN, and pressure in the secondary conduit, PSEC, to apportion flow from an inlet (112) of the regulator valve to the flow inlet conduit.

2. The system as recited in claim 1, wherein the regulator valve (110) includes a piston (114) that divides between PIN and PSEC, and wherein the piston includes a chamber (116) for passage of fluid from the inlet of the regulator valve into the flow inlet conduit.

3. The system as recited in claim 2, wherein the piston (114) is positioned to selectively occlude an outlet (118) of the regulator valve leading to the flow inlet conduit to meter flow into the flow inlet conduit based on pressure differential between PIN and PSEC.

4. The system as recited in claim 2, wherein the EBV (106) includes a piston (120) that divides between an equalization conduit (122) and the flow inlet conduit (102) to apportion flow from the flow inlet conduit to the secondary conduit (108) based on pressure differential between pressure in the flow inlet conduit downstream of the regulator valve, PFDV, plus PFA and pressure in the equalization conduit.

5. The system as recited in claim 4, further comprising a pressure equalization solenoid, PES (124), that includes a valve body positioned to selectively connect a conduit that is pressurized to PFA into fluid communication with a conduit that is pressurized to PD to switch the primary and secondary conduits between an equalized mode wherein the primary and secondary conduits are at equal pressure, and an un-equalized mode wherein the primary and secondary conduits are at unequal pressure.

6. The system as recited in claim 5, further comprising an un-equalized enrichment valve, UEV (134), that connects between the flow inlet conduit and the secondary conduit.

7. The system as recited in claim 6, wherein the UEV (134) is configured to pressurize the primary conduit higher than the secondary conduit in the un-equalized mode.

8. A method comprising:
in a system as recited in claim 1, increasing flow through the regulating valve after a command for switching the system from an equalized mode to an un-equalized mode.

9. The method as recited in claim 8, wherein the regulating valve allows pressure in the flow inlet conduit and secondary conduit to change rapidly without affecting anything upstream.

10. The method as recited in claim 8 or 9, further comprising using the regulator valve to eliminate pressure changes upstream of the regulator valve.
